# EUROPÄISCHE PATENTSCHRIFT

(11) **EP 3 055 592 B1**
(45) Veröffentlichungstag und Bekanntmachung des Hinweises auf die Patenterteilung: **01.08.2018**
(21) Anmeldenummer: 14766141.7
(22) Anmeldetag: 10.09.2014
(51) Int. Cl.: F16H 61/26, F16H 59/04

(54) **KOPPELELEMENT FÜR EINEN SCHALTSCHLITTEN, SCHALTSCHLITTEN UND VERFAHREN ZUM MONTIEREN EINES WÄHLHEBELS AN EINEN SCHALTSCHLITTEN**
COUPLING ELEMENT FOR A SHIFTING CARRIAGE, SHIFTING CARRIAGE, AND METHOD FOR MOUNTING A GEAR SELECTION LEVER ON A SHIFTING CARRIAGE
ÉLÉMENT D'ACCOUPLEMENT POUR COULISSEAU DE CHANGEMENT DE VITESSE, COULISSEAU DE CHANGEMENT DE VITESSE ET PROCÉDÉ DE MONTAGE D'UN LEVIER DE SÉLECTION SUR UN COULISSEAU DE CHANGEMENT DE VITESSE

(30) Priorität: 10.10.2013 DE 102013220408
(43) Veröffentlichungstag der Anmeldung: 17.08.2016
(73) Patentinhaber: ZF Friedrichshafen AG, 88046 Friedrichshafen (DE)
(72) Erfinder: SZEKERES-KRISELIUS, Jan, 49448 Lemförde (DE)
(86) Internationale Anmeldenummer: PCT/EP2014/069243
(87) Internationale Veröffentlichungsnummer: WO 2015/051961

(56) Entgegenhaltungen:
- EP-A2- 0 747 612
- FR-A- 1 215 946
- GB-A- 334 199
- GB-A- 2 027 115
- JP-U- S60 109 128

## Beschreibung

Die vorliegende Erfindung betrifft ein Koppelelement für einen Schaltschlitten zur schaltwirksamen Übertragung einer Schwenkbewegung eines Wählhebels an ein Kraftfahrzeuggetriebe, insbesondere an ein Kraftfahrzeug-Automatikgetriebe, sowie einen Schaltschlitten. Die auf die Anmelderin zurückgehende Offenlegungsschrift DE 102 52 009 A1 betrifft eine Wählhebelvorrichtung zur Übertragung von mittels eines Wählhebels auswählbaren Fahrstufen an ein Kraftfahrzeuggetriebe. Die Wählhebelvorrichtung umfasst einen um eine Wählachse und eine Schaltachse schwenkbaren Wählhebel, der mit einem Ende in einen Schaltschlitten eingreift, um diesen zwangszubewegen. Der Schaltschlitten ist mechanisch beispielsweise mittels eines einfachen Seilzuges, eines Bowdenzuges oder eines mechanischen Gestänges mit dem Kraftfahrzeuggetriebe schaltwirksam verbunden. Der Wählhebel weist entlang seiner Längsachse zwei mittels einer Kunststoffumspritzung angebrachte, unterschiedlich große Kugelelemente auf, wobei das größere Kugelelement eine Wählhebellagerung in der Wählhebelvorrichtung ausbildet, um welche der Wählhebel schwenkbar ist. Das kleinere Kugelelement koppelt den Wählhebel mit dem Schaltschlitten zur zwangsbewegten Mitführung desselbigen. Bei der Bewegung des Wählhebels beschreibt das kleinere Kugelelement somit eine kugelförmige Bahn um die Wähllagerung. Um die kugelförmige Bahnbewegung ausgleichen zu können, ist ein kugelschalenartiger Eingriff vorgesehen, der in Eingriff mit dem kleineren Kugelelement bringbar ist. Der Schaltschlitten weist eine Aufnahme zur Aufnahme des kugelschalenartigen Eingriffs im Eingriffszustand mit dem kleineren Kugelelement und dem Wählhebel auf.

Die vorgenannte Lösung ist dahingegen nachteilig, dass ein veränderlicher Abstand zwischen den beiden Kugelelementen eine Änderung des entsprechenden Spritzwerkzeuges zur Umspritzung des Wählhebels oder alternativ Wechseleinsätze erforderlich macht. Ferner ist eine Montage der vorbekannten Wählhebelvorrichtung relativ aufwendig. Denn zunächst ist der kugelschalenartige Eingriff auf das an dem Wählhebel angebrachte, kleinere Kugelelement aufzubringen, wodurch das kugelschalenartige Element in seiner Winkellage undefiniert sein kann. Beim anschließenden Einbringen des Wählhebels mit dem aufgebrachten kugelschalenartigen Element in den Schaltschlitten kann diese undefinierte Lage zu der Notwendigkeit führen, das kugelschalenartige Element zunächst auszurichten zu müssen.

Die GB 334 199 A offenbart ein Koppelelement nach dem Oberbegriff des Anspruchs 1. Mit der vorliegenden Erfindung soll ein Koppelelement für einen Schaltschlitten sowie ein Schaltschlitten zur schaltwirksamen Übertragung einer Schwenkbewegung eines Wählhebels an ein Kraftfahrzeuggetriebe bereitgestellt werden, welches insbesondere eine einfache Montage des Wählhebels an dem Schaltschlitten erlaubt sowie für unterschiedliche Wählhebel eingesetzt werden kann.

Nach der vorliegenden Erfindung wird ein Koppelelement für einen Schaltschlitten zur schaltwirksamen Übertragung einer Schwenkbewegung eines Wählhebels an ein Kraftfahrzeuggetriebe, insbesondere an ein Kraftfahrzeug-Automatikgetriebe mit den Merkmalen des Patentanspruchs 1 vorgeschlagen. Unter einer schaltwirksamen Übertragung oder Verbindung im Sinne der vorliegenden Erfindung ist eine solche Übertragung bzw. Verbindung zu verstehen, bei welcher durch eine Schwenkbewegung des Wählhebels mittels des zwangsbewegten Schaltschlittens eine solche Kraftübertragung in Richtung des Kraftfahrzeuggetriebes stattfindet, dass in der Kraftfahrzeuggetriebevorrichtung eine der Wählhebelposition entsprechende Schaltbetätigung des Kraftfahrzeuggetriebes durchführbar ist. Eine auswählbare Fahrstufe kann beispielsweise die in einem Automatikgetriebe ausführbare Parkstellung P, Neutralstellung N, Rückwärtsfahrbetrieb R, Drive bzw. Vorwärtsfahrbetrieb D oder eine sonstige, die Kraftahrzeuggetriebevorrichtung schaltende Fahrstufe sein.

Das vorgeschlagene Koppelelement umfasst einen Durchlass zur Aufnahme eines Abschnitts des Wählhebels. Das Koppelelement kann vorzugsweise aus einem kunststoffhaltigen Material mittels eines Spritzgussverfahrens hergestellt sein. So kann kostengünstig ein bedarfsgerecht angepasstes Koppelelement bereitgestellt werden. Weiter bevorzugt ist das Koppelelement einteilig mit einem Schaltschlitten bspw. mittels des Spritzgussverfahrens ausgeformt.

Das Koppelelement zeichnet sich dadurch aus, dass es einen Ring mit einer Bohrung, in welche der Wählhebelabschnitt einbringbar ist, umfasst, wobei der Ring in eine zum verschwenkbaren Halten des Rings ausgebildete Aufnahme des Durchlasses eingebracht ist. Damit wird im Unterschied zum Stand der Technik auf eine Anspritzung des Kugelelements an dem Wählhebel verzichtet. Im Gegensatz dazu wird ein in dem Durchlass bzw. in die Ringaufnahme zunächst einzubringender Ring mit einer Bohrung bereitgestellt, in welche der Wählhebelabschnitt anschließend einbringbar bzw. einsetzbar ist. Der Ring ist in der Ringaufnahme verschwenkbar und wird gleichzeitig mittels der Ringaufnahme in dem Durchlass gehalten. Dadurch lassen sich unterschiedliche Längenvarianten des Wählhebels mit ein und demselben Koppelelement berücksichtigen. Ferner braucht der Wählhebel in Bedarfsfall nur mit der die Wählhebellagerung ausmachenden Kunststoffumspritzung versehen werden. Des Weiteren ist eine Montage des Wählhebels an das Koppelelement bzw. an dem Schaltschlitten auf einfache Weise möglich.

Bevorzugt ist die Ringbohrung derart ausgebildet, dass der Wählhebelabschnitt in der Ringbohrung gleitend oder frei beweglich ist. Mit anderen Worten ist die Ringbohrung vorzugsweise derart ausgebildet, dass der Wählhebelabschnitt relativ beweglich zu dem Ring in der Ringbohrung anordbar ist. Im Sinne der vorliegenden Erfindung wird unter einer gleitend beweglichen Anordnung eine solche Anordnung zweier Komponenten verstanden, bei welcher die eine Komponente an der anderen Komponente anliegt und entlang der anderen Komponente diese wenigstens abschnittsweise vollumfänglich berührend bewegbar ist. Übertragen auf die bevorzugte Ausführungsform weist die Ringbohrung unter Berücksichtigung entsprechender Toleranzen wie beispielsweise den vorgenannten Toleranzen ein dem Außenmaß des Wählhebelabschnitts entsprechendes Innenmaß auf. Eine frei bewegliche Anordnung zweier Komponenten korrespondiert dahingegen zu einer mit einem Spiel beabstandete Anordnung. Für die Alternativ bevorzugte Ausführungsform bedeutet dies, dass ein Innenmaß der Ringbohrung zu einem Außenmaß des Wählhebelabschnitts zuzüglich eines vorbestimmten Spiels entspricht. Damit wird eine bedarfsgerechte Anpassung eines Schaltschlittenweges sowie ein bedarfsgerechter Abstand zwischen der Aufnahme des Wählhebelabschnitts in dem Koppelelement und der Wählhebellagerung auf einfache Weise ermöglicht. Eine solche bedarfsgerechte Anpassung kann beispielsweise für unterschiedlich lang ausgestaltete Wählhebelstangen und Schaltwegeigenschaften erforderlich sein.

Nach der vorliegenden Erfindung weist das Koppelelement im Bereich der Ringaufnahme einen Anschlag auf, der eingerichtet ist, mit einem Gegenanschlag, der mit dem Ring ortsfest verbunden ist, zum Begrenzen eines Schwenkwinkels des Rings zusammenzuwirken. Dazu kann zum einem die Montage des Wählhebels in dem Schaltschlittens vereinfacht werden, zum anderen ist eine Begrenzung des Schwenkwinkels und somit eine Begrenzung des Schwenkbereiches des Wählhebels im aufgenommenen Zustand des selbigen auf einfache Weise möglich.

Gemäß einer weiteren bevorzugten Ausführungsform der vorliegenden Erfindung ist der Ring aus einem Kugelring ausgebildet, wobei die Ringaufnahme eine zu einer Außenoberfläche des Kugelrings komplementäre kugelschalenartige Innenoberfläche aufweist. Dadurch kann eine kugelartige Lagerung des Ringes in dem Durchlass gewährleistet werden, wodurch eine Wählhebelbewegung in jede Richtung parallel zu einer Durchgangsebene der Ringbohrung ermöglicht wird. Ein die Außenoberfläche des Kugelrings ausbildender Außenradius sowie ein die kugelschalenartige Innenoberfläche der Ringaufnahme ausbildender Innenradius sind vorzugsweise derart gewählt, dass der Kugelring in die Ringaufnahme einschnappbar ist. Mittels dieser Art der Fixierung und Lagerung des Kugelrings in der Ringaufnahme kann der Kugelring zum einen von der Ringaufnahme gehalten und zum anderen in der Ringaufnahme haltbar verschwenkt werden. Die Einschnapp- und Halteeigenschaft kann des Weiteren durch eine bevorzugte kunststoffhaltige Ausbildung wenigstens der Ringaufnahme als auch weiter bevorzugt des Kugelrings begünstigt werden.

In einer dazu alternativen Ausführungsform weist der Ring eine querschnittlich konkave Außenoberfläche auf, wobei die Ringaufnahme eine zu der konkaven Außenoberfläche komplementäre querschnittlich kreissegmentartige, konvexe Innenoberfläche aufweist. Der Ring weist mit anderen Worten entlang seines Außenumfanges eine zu der Ringmitte weisende Ausbuchtung auf, wohingegen die Ringaufnahme eine zu der Ringaufnahmemitte hin gerichtete, zu der konvexen Ringinnenoberfläche komplementäre, entlang des Ringaufnahmeumfangs verlaufende Ausbeulung aufweist.

Nach einer weiteren bevorzugten Ausführungsform der vorliegenden Erfindung ist der Durchlass ausgehend von der Ringaufnahme trichterartig verbreiternd ausgebildet. Weiter bevorzugt ist die Trichterform derart gewählt, dass ein den Trichter begrenzender Durchlassrand einen Anschlag für den Wählhebel ausformt. Damit kann ein Schwenkbereich des Wählhebels unter Berücksichtigung des Schaltschlittenweges bedarfsgerecht angepasst werden.

Der Trichter weist in einer Draufsicht vorzugsweise eine kreisförmige Form auf. Der Trichter bzw. der Durchlass kann jedoch jede denkbare geometrische Form annehmen, solange das Kopplungselement bzw. der Kopplungsring in der Ringaufnahme des Durchlasses schwenkbar gehalten werden kann und der Durchlass eine Schwenkbewegung des Wählhebels in wenigstens einer Richtung zulässt. Ferner können nach einer bevorzugten Ausführungsform der Trichter und die Ringaufnahme zueinander eine unterschiedliche geometrische Form aufweisen. Beispielsweise kann der Trichter vieleckig, insbesondere rechteckig oder quadratisch ausgestaltet sein, während die Ringaufnahme kreisförmig ausgebildet ist.

Weitere Merkmale und Vorteile der Erfindung ergeben sich aus der nachfolgenden Beschreibung bevorzugter Ausführungsbeispiele der Erfindung, anhand der Figuren und Zeichnungen, die erfindungswesentliche Einzelheiten zeigen und aus den Patentansprüchen.

Die bevorzugten Ausführungsbeispiele der Erfindung werden nachfolgend anhand der beigefügten Zeichnungen näher erläutert. Es zeigen:
- Fig. 1: eine perspektivische Draufsicht eines Koppelelements nach einem bevorzugten Ausführungsbeispiel;
- Fig. 2: eine Schnittansicht des in Figur 1 gezeigten Koppelelements;
- Fig. 3: eine perspektivische Unteransicht des in Figur 1 gezeigten Koppelelements; und
- Fig. 4: ein Ablaufdiagramm eines Verfahrens zum Montieren eines Wählhebels an einen Schaltschlitten mittels eines Koppelelements nach einem bevorzugten Ausführungsbeispiel.

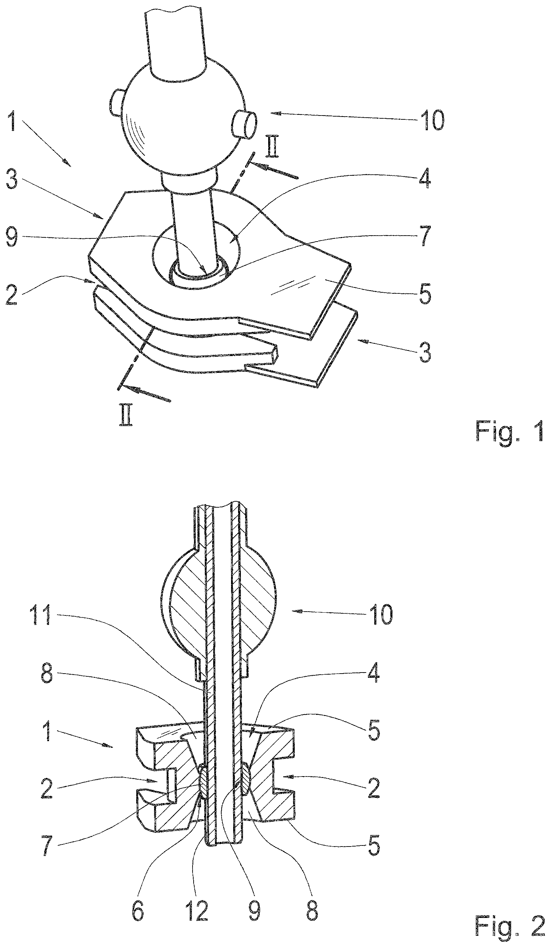

Fig. 1 zeigt eine perspektivische Draufsicht eines Koppelelements 1 nach einem bevorzugten Ausführungsbeispiel. Das Koppelelement 1 ist aus einem kunststoffhaltigen Material mittels eines Spritzgussverfahrens ausgebildet. Das Koppelelement 1 (Fig. 2) ist zu zwei seiner orthogonal aufeinander stehenden Mittenebenen spiegelsymmetrisch ausgestaltet. Das Koppelelement 1 ist eingerichtet, in einen nicht dargestellten Schaltschlitten für eine Kraftfahrzeuggetriebe-Wählhebelvorrichtung eingesetzt und verbunden zu werden, wobei der Schaltschlitten zur schaltwirksamen Übertragung einer Schwenkbewegung eines Wählhebels 10 der Wählhebelvorrichtung an ein Kraftfahrzeuggetriebe vorgesehen ist. Mittels des Koppelelements 1 wird eine Zwangsbewegung des Schaltschlittens durch den Wählhebel 10 ermöglicht.

Das Koppelelement 1 weist querschnittlich annähernd eine Doppel-T-Form auf, wodurch auf gegenüberliegenden Längsseiten jeweils eine Eingriffsnut 2 zum Eingriff mit einer Eingriffsfeder des Schaltschlittens ausgebildet wird. Die Eingriffsnuten 2 sind zwischen stirnseitigen Enden 3 des Koppelelements 1 angeordnet, wobei die stirnseitigen Enden 3 derart eingerichtet sind, dass das Koppelelement 1 in den Schaltschlitten einsetzbar und mit diesem befestigbar ist. Alternativ dazu kann das Koppelelement 1 selbst den Schaltschlitten ausformen, wobei an den stirnseitigen Enden 3 eine Einrichtung vorgesehen ist, mittels welcher eine Linearbewegung des Koppelelements 1 an eine Kraftfahrzeugvorrichtung schaltwirksam übertragen werden kann. Dies kann beispielsweise durch eine Anbindung einer Kraftübertragungseinrichtung an ein stirnseitiges Ende 3 des Koppelelementes 1 wie in dem eingangsbeschriebenen Stand der Technik realisiert sein.

Das Koppelelement 1 umfasst einen Durchlass 4, der die voneinander abgewandten Oberflächenseiten 5 des Doppel-T-förmigen Koppelelementes 1 miteinander verbindet. Fig. 2 zeigt eine Schnittansicht des Durchlasses 4 entlang der in Fig. 1 gezeigten Schnittlinie II-II. Mit Fig. 2 wird die prinzipielle Doppel-T-Form des Koppelelements 1 verdeutlicht sowie die Ausgestaltung des Durchlasses 4 im Einzelnen gezeigt. Der Durchlass 4 umfasst in einem Mittenbereich, der in einer Symmetrieebene des Koppelelements 1 liegt, eine Ringaufnahme 6, welcher einen Kugelring 7 schwenkbar hält. Von der Ringaufnahme 6 erstreckt sich der Durchlass 4 trichterartig verbreiternd bis zu der jeweiligen Oberflächenseite 5. Dadurch werden voneinander weglaufende Trichter 8 ausgeformt, die spiegelsymmetrisch zu der die Ringaufnahme 6 wenigstens teilweise umfassenden Symmetrieebene des Koppelelements 1 sind. Eine Öffnungsbreite der Trichter 8 bzw. ein zwischen dem Trichter 8 und der die Ringaufnahme 6 wenigstens teilweise umfassende Symmetrieebene gebildeter Winkel ist derart gewählt, dass der den Kugelring 7 durchstoßende Wählhebel 10 innerhalb eines vorbestimmten Schwenkwinkelbereichs, der durch eine vorbestimmte, frei wählbare Anordnung der über den Wählhebel 10 auswählbaren Fahrstufen festlegbar ist, ungehindert verschwenkbar ist. Vorzugsweise kann die Öffnungsbreite des Trichters 8 bzw. der Winkel zwischen dem Trichter 8 und der die Ringaufnahme 6 wenigstens teilweise umfassende Symmetrieebene derart gewählt sein, dass der Wählhebel 10 in wenigstens einer vorbestimmten Wählhebelposition, welche einer auswählbaren Fahrstufe entsprechen kann, in Anlage mit einem Trichterrand des Trichters 8 kommt, wodurch ein Endanschlag für den schwenkbaren Wählhebel 10 ausgeformt wird.

Die Ringaufnahme 6 und die von der Ringaufnahme 6 fortsetzenden Trichter 8 bilden den Durchlass 4 sanduhrartig aus, wobei die Ringaufnahme 6 den mittleren, eingeschnürten Bereich der sanduhrartigen Form ausmacht. Die Ringaufnahme 6 weist auf einer der Mittenachse des Durchlasses 4 zugewandten Seite eine kugelschalenartige Form auf. Mit anderen Worten ist eine Oberflächenseite der Ringaufnahme 6, welche einen Teil der Innenoberfläche des Durchlasses 4 ausmacht, über einen von der Mittenachse des Durchlasses 4 ausgehenden, vorbestimmten Radius ausgebildet. Dadurch weist die Ringaufnahme 6 querschnittlich eine konkave Form auf. Die querschnittlich konkave Form bzw. die kugelschalenartige Ausgestaltung der Ringaufnahme 6 ist komplementär zu einer Außenoberfläche des in der Ringaufnahme 6 angeordneten Kugelrings 7 ausgestaltet. Mit anderen Worten bildet die Ringaufnahme 6 eine Negativform der Außenoberfläche des Kugelringes 7 aus.

Die zueinander komplementären Oberflächen der Ringaufnahme 6 und des Kugelrings 7 sind dergestalt, dass der Kugelring 7 in die Ringaufnahme 6 über einen bestimmten Kraftaufwand einschnappbar ist. Dadurch kann der Kugelring 7 in der Ringaufnahme 6 gehalten und sich aufgrund der komplementären Ausgestaltung der entsprechenden Oberflächen der Ringaufnahme 6 und des Kugelringes 7 relativ zu der Ringaufnahme 6 bewegen bzw. verschwenken.

Der Kugelring 7 umfasst eine zentrale, zylindrische Bohrung 9 zur Aufnahme eines Abschnitts des Wählhebels 10. Der Wählhebel 10 ist aus einer querschnittlich kreisförmigen Wählhebelstange 11, die mit einem ihrer freien Enden 12 in die Bohrung 9 des Kugelringes 7 einbringbar ist, ausgebildet. Der Innendurchmesser der Bohrung 9 kann derart gewählt sein, dass eine Relativbewegung der Wählhebelstange 11 zu dem Kugelring 7 ungehindert oder nahezu ungehindert möglich ist. Eine ungehinderte Relativbewegung der Wählhebelstange 11 zu dem Kugelring 7 kann dadurch erreicht werden, dass der Innendurchmesser der Bohrung 9 unter Berücksichtigung von Toleranzen wie beispielsweise Herstellungs- und Bauteiltoleranzen größer als ein Außendurchmesser der Wählhebelstange 11 ist. Eine nahezu ungehinderte Relativbewegung kann beispielsweise dadurch erreicht werden, dass der Innendurchmesser der Bohrung 9 derartig gewählt ist, dass der Kugelring 7 gleitend an der Wählhebelstange 11 unter Berücksichtigung der Toleranzen wie beispielsweise den vorgenannten Toleranzen an dem Wählhebelabschnitt zur Anlage kommt.

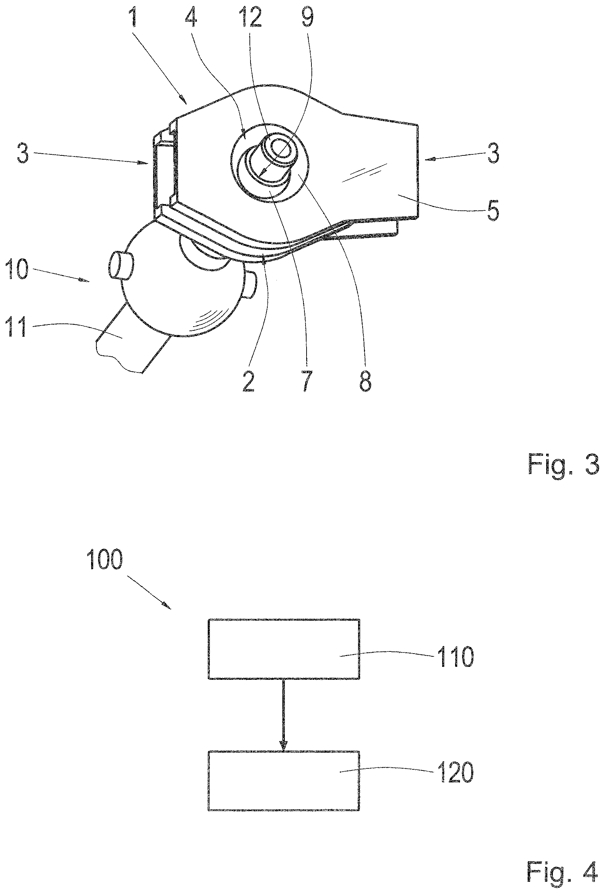

Fig. 4 zeigt ein Ablaufdiagramm eines Verfahrens 100 zum Montieren eines Wählhebels einer Wählhebelvorrichtung an einen Schaltschlitten mittels eines Koppelelements nach einem bevorzugten Ausführungsbeispiel. Das Verfahren umfasst einen Schritt 110 des Einbringens eines Rings mit einer Bohrung in eine in einem Durchlass des Koppelelements ausgebildete Aufnahme zum schwenkbaren Halten des Rings. Diesem Schritt folgt ein Schritt 120 des Einbringens eines Abschnitts des Wählhebels in die Ringbohrung. Der zweite Einbringschritt 120 kann sich unmittelbar an den ersten Einbringschritt 110 anschließen. Alternativ dazu können Zwischenschritte zur Anpassung des Verfahrens vorgesehen sein. Beispielsweise kann, sofern das Koppelelement ein von dem Schaltschlitten getrenntes Bauteil ausmacht, ein Montageschritt vorgesehen sein, mit welchem das Koppelelement an dem Schaltschlitten montierbar ist. Der Montageschritt ist jedoch nicht zwangsläufig zwischen dem ersten und zweiten Einbringschritt vorzusehen. Der Montageschritt kann alternativ dazu vor dem ersten oder nach dem zweiten Einbringschritt durchgeführt werden.

Beim dem Wählhebel, dem Schaltschlitten, dem Koppelelement und dem Ring kann es sich um eines der vorbeschriebenen Komponenten handeln.

Mittels der bevorzugten Ausführungsformen kann auf eine kugelartige Umspritzung des Wählhebels verzichtet werden. Ferner kann der Wählhebel einfacher in den Schaltschlitten eingebracht werden, da eine mögliche Fehlstellung der den Wählhebel mit dem Schaltschlitten koppelnden Elemente sowie eine einhergehende vorherige Ausrichtung entfallen kann. Des Weiteren kann ein Abstand zwischen der Wählhebellagerung und dem Kopplungspunkt mit dem Schaltschlitten bedarfsgerecht auf einfache Weise angepasst bzw. variiert werden.

Die beschriebenen und in den Figuren gezeigten Ausführungsbeispiele sind nur beispielhaft gewählt. Die Abmessungen der geometrischen Form der beschriebenen Elemente sind nur beispielhaft und können dementsprechend angepasst werden.

### Bezugszeichen

- 1: Koppelelement
- 2: Führungsnut
- 3: stirnseitiges Ende
- 4: Durchlass
- 5: Oberflächenseite
- 6: Ringaufnahme
- 7: Kugelring
- 8: Trichter
- 9: Bohrung
- 10: Wählhebel
- 11: Wählhebelstange
- 12: freies Ende der Wählhebelstange
- 100: Verfahren
- 110: erster Einbringschritt
- 120: zweiter Einbringschritt

## Patentansprüche

1. Koppelelement (1) für einen Schaltschlitten zur schaltwirksamen Übertragung einer Schwenkbewegung eines Wählhebels (10) an ein Kraftfahrzeuggetriebe, insbesondere an ein Kraftfahrzeug-Automatikgetriebe, wobei das Koppelelement (1) einen Durchlass (4) zur Aufnahme eines Abschnitts des Wählhebels (10) umfasst, sowie einen Ring (7) mit einer Bohrung (9), in welche der Wählhebelabschnitt einbringbar ist, wobei der Ring (7) in eine zum verschwenkbaren Halten des Rings (7) ausgebildete Aufnahme (6) des Durchlasses (4) eingebracht ist, **gekennzeichnet durch** einen Anschlag im Bereich der Ringaufnahme (6), der eingerichtet ist, mit einem Gegenanschlag, der mit dem Ring (7) ortsfest verbunden ist, zum Begrenzen eines Schwenkwinkels des Rings zusammenzuwirken.

2. Koppelelement (1) nach Anspruch 1, **dadurch gekennzeichnet, dass** die Bohrung (9) derart ausgebildet ist, dass der Wählhebelabschnitt in der Bohrung (9) gleitend oder frei beweglich ist.

3. Koppelelement (1) nach einem der vorherigen Ansprüche, **dadurch gekennzeichnet, dass** der Ring aus einem Kugelring (7) ausgebildet ist, wobei die Ringaufnahme (6) eine zu einer Außenoberfläche des Kugelrings (7) komplementäre kugelschalenartige Innenoberfläche aufweist.

4. Koppelelement (1) nach einem der Ansprüche 1 bis 2, **dadurch gekennzeichnet, dass** der Ring (7) eine querschnittlich konkave Außenoberfläche aufweist, wobei die Ringaufnahme (6) eine zu der konkaven Außenoberfläche des Rings (7) komplementäre querschnittlich kreissegmentartige Innenoberfläche aufweist.

5. Koppelelement (1) nach einem der vorherigen Ansprüche, **dadurch gekennzeichnet, dass** der Durchlass (4) ausgehend von der Ringaufnahme (6) trichterartig verbreiternd ausgebildet ist.

6. Schaltschlitten zur schaltwirksamen Übertragung einer Schwenkbewegung eines Wählhebels (10) an ein Kraftfahrzeuggetriebe, **gekennzeichnet durch** ein Koppelelement (1) nach einem der vorherigen Ansprüche.

## Claims

1. Coupling element (1) for a shift carriage for the shift-enabling transmission of a pivoting movement of a selector lever (10) to a motor vehicle transmission, in particular to a motor vehicle automatic transmission, the coupling element (1) comprising a passage (4) for receiving a section of the selector lever (10), and a ring (7) with a bore (9), into which the selector lever section can be introduced, the ring (7) being introduced into a receptacle (6) of the passage (4), which receptacle (6) is configured to pivotably hold the ring (7), **characterized by** a stop in the region of the ring receptacle (6), which stop is set up to interact with a corresponding stop which is connected to the ring (7) in a stationary manner, in order to limit a pivoting angle of the ring.

2. Coupling element (1) according to Claim 1, **characterized in that** the bore (9) is configured in such a way that the selector lever section can be moved slidingly or freely in the bore (9).

3. Coupling element (1) according to either of the preceding claims, **characterized in that** the ring is configured from a sphere ring (7), the ring receptacle (6) having a ball socket-like inner surface which is complementary with respect to an outer surface of the sphere ring (7).

4. Coupling element (1) according to either of Claims 1 and 2, **characterized in that** the ring (7) has an outer surface which is concave in cross section, the ring receptacle (6) having an inner surface which is circular segment-like in cross section and is complementary with respect to the concave outer surface of the ring (7).

5. Coupling element (1) according to one of the preceding claims, **characterized in that**, starting from the ring receptacle (6), the passage (4) is configured so as to widen in a funnel-like manner.

6. Shift carriage for the shift-enabling transmission of a pivoting movement of a selector lever (10) to a motor vehicle transmission, **characterized by** a coupling element (1) according to one of the preceding claims.

## Revendications

1. Élément d'accouplement (1) pour un chariot de commutation pour le transfert par commutation d'un mouvement de pivotement d'un levier de sélection (10) au niveau d'une boîte de vitesses de véhicule automobile, en particulier au niveau d'une boîte de vitesses automatique de véhicule automobile, l'élément d'accouplement (1) comprenant un passage (4) pour recevoir une portion du levier de sélection (10) ainsi qu'une bague (7) avec un alésage (9) dans lequel peut être introduite la portion du levier de sélection, la bague (7) étant introduite dans un évidement (6) du passage (4) réalisé de manière à retenir la bague (7) de manière pivotante, **caractérisé par** une butée dans la région du logement annulaire (6), qui est prévue pour coopérer avec une butée conjuguée qui est connectée fixement à la bague (7), pour limiter un angle de pivotement de la bague.

2. Élément d'accouplement (1) selon la revendication 1, **caractérisé en ce que** l'alésage (9) est réalisé de telle sorte que la portion du levier de sélection soit librement mobile ou puisse glisser dans l'alésage (9).

3. Élément d'accouplement (1) selon l'une quelconque des revendications précédentes, **caractérisé en ce que** la bague est réalisée à partir d'une bague sphérique (7), le logement de bague (6) présentant une surface interne de type coque sphérique complémentaire de la surface extérieure de la bague sphérique (7).

4. Élément d'accouplement (1) selon l'une quelconque des revendications 1 à 2, **caractérisé en ce que** la bague (7) présente une surface extérieure de section transversale concave, le logement annulaire (6) présentant une surface intérieure de type segment de cercle en section transversale complémentaire de la surface extérieure concave de la bague (7).

5. Élément d'accouplement (1) selon l'une quelconque des revendications précédentes, **caractérisé en ce que** le passage (4) est réalisé de manière à s'élargir en forme d'entonnoir à partir du logement annulaire (6).

6. Chariot de commutation pour le transfert par commutation d'un mouvement de pivotement d'un levier de sélection (10) à une boîte de vitesses de véhicule automobile, **caractérisé par** un élément d'accouplement (1) selon l'une quelconque des revendications précédentes.
